# FASCICULE DE BREVET EUROPEEN

(11) **EP 2 615 032 B1**
(45) Date de publication et mention de la délivrance du brevet: **17.12.2014**
(21) Numéro de dépôt: 13000045.8
(22) Date de dépôt: 07.01.2013
(51) Int. Cl.: F02C 9/42

(54) **Installation motrice d'un aéronef, aéronef, et procédé de pilotage dudit aéronef**
Antrieb eines Flugzeugs, Flugzeug sowie Verfahren zur Steuerung dieses Flugzeugs
Powerplant of an aircraft, aircraft and method for piloting said aircraft

(30) Priorité: 12.01.2012 FR 1200089
(43) Date de publication de la demande: 17.07.2013
(73) Titulaire: Airbus Helicopters, 13725 Marignane Cedex (FR)
(72) Inventeur: Evrard, Jean Philippe, F-13012 Marseille (FR); Corpron, Alban, F-13300 Salon DE Provence (FR)
(74) Mandataire: GPI & Associés

(56) Documents cités:
- EP-A1- 0 816 226
- WO-A1-99/51868
- FR-A1- 2 902 408
- US-A- 5 873 546
- US-A1- 2009 186 320

## Description

La présente invention concerne une installation motrice d'un aéronef, notamment un giravion, et un procédé de pilotage dudit aéronef.

La plupart des giravions construits actuellement sont équipés d'un ou deux turbomoteurs à turbine libre. La puissance est alors prélevée sur une turbine basse pression, dénommée « turbine libre », laquelle est mécaniquement indépendante de l'ensemble du compresseur et de l'étage haute pression, comprenant notamment une turbine haute pression, du turbomoteur. La turbine libre d'un turbomoteur tournant généralement entre 20 000 et 50 000 tours par minute, une boîte de réduction de vitesse est nécessaire pour la liaison au rotor principal du giravion dont le régime de rotation est sensiblement compris entre 200 et 400 tours par minute: il s'agit de la boîte de transmission principale de puissance dite plus simplement boîte de transmission principale.

Les limitations thermiques d'un turbomoteur, et les limitations en couple d'une boîte de transmission principale, permettent de définir une enveloppe d'utilisation du turbomoteur englobant au moins deux régimes normaux d'utilisation d'un turbomoteur agencé sur un giravion monomoteur ou bimoteur:
- le régime de décollage correspondant à un niveau de couple pour la boîte de transmission principale et un échauffement du turbomoteur admissibles pendant un temps limité sans dégradation notable, ce régime de décollage étant défini par une puissance maximale au décollage PMD et une durée d'utilisation de cette puissance maximale au décollage généralement de l'ordre de cinq minutes,
- le régime maximal continu, ce régime maximal continu étant défini par une puissance maximale en continu PMC correspondant environ à 90% de la puissance maximale au décollage PMD et par une durée d'utilisation de cette puissance maximale en continu généralement illimitée.

Sur un giravion bimoteur, l'enveloppe d'utilisation englobe aussi des régimes de surpuissance d'urgence, uniquement utilisés lorsque l'un des deux turbomoteurs est en panne :
- le premier régime d'urgence, ce premier régime d'urgence étant défini par une puissance de super urgence OEI30" souvent égale à environ 112% à 120% de la puissance maximale au décollage PMD et par une durée d'utilisation de cette puissance de super urgence OEI30" généralement de l'ordre de trente secondes consécutives au maximum, la puissance de super urgence étant classiquement utilisable trois fois pendant un vol,
- le deuxième régime d'urgence, ce deuxième régime d'urgence étant défini par une puissance maximale d'urgence OEI2' égale à environ 105% à 110% de la puissance maximale au décollage PMD et par une durée d'utilisation de cette puissance maximale d'urgence PMU de l'ordre de deux minutes consécutives au maximum ;
- le troisième régime d'urgence, ce troisième régime d'urgence étant défini par une puissance intermédiaire d'urgence OElcont sensiblement égale à la puissance maximale au décollage PMD et par une durée d'utilisation illimitée de cette puissance intermédiaire d'urgence OElcont pour le reste du vol après la panne du turbomoteur.

Ainsi, le motoriste définit une enveloppe d'utilisation du turbomoteur, cette enveloppe d'utilisation comprenant une pluralité de régimes, chaque régime associant une puissance développée par le turbomoteur et une durée d'utilisation de cette puissance. On utilise parfois plus simplement le terme « enveloppe » pour désigner une telle enveloppe d'utilisation ou encore l'expression « enveloppe de performances ».

Les écarts relatifs de puissance entre les différents régimes sont en outre appelés « étagement de puissance » du moteur.

Par ailleurs, les contraintes thermiques et mécaniques et surtout le phénomène de fluage des aubes de turbine peuvent entraîner une dégradation du turbomoteur, plus ou moins importante selon les régimes. Pour garantir la sécurité du vol et l'obtention des performances, l'endommagement maximal acceptable pour un turbomoteur est déterminé.

Par suite, on évalue le potentiel global d'utilisation du turbomoteur. Cela revient concrètement à définir un nombre d'heures de vol maximal, dénommé TBO (« *Time Between Overhaul »* en langue anglaise) par l'homme du métier, que le turbomoteur est capable d'effectuer à compter de sa dernière révision ou de sa première utilisation, suivant le cas dans lequel on se trouve. Une fois ce nombre d'heures de vol maximal atteint, le turbomoteur est déposé puis révisé.

Ainsi, le motoriste définit une enveloppe d'utilisation du turbomoteur associée à un nombre d'heures de vol maximal, cette enveloppe d'utilisation comprenant une pluralité de régimes, chaque régime associant une puissance développée par le turbomoteur et une durée d'utilisation de cette puissance. De plus, le motoriste associe un nombre d'heures de vol maximal à cette enveloppe d'utilisation.

On rappelle qu'un turbomoteur est usuellement muni d'un moyen de contrôle, les informations relatives aux régimes d'une enveloppe d'utilisation étant stockées dans ce moyen de contrôle. Dès lors, lorsque le pilote d'un aéronef requiert l'utilisation d'un régime donné, ce moyen de contrôle commande le turbomoteur et notamment son doseur à carburant afin que le turbomoteur réponde à l'ordre donné.

Par ailleurs, pour qu'un giravion obtienne son autorisation de vol dans un pays déterminé, on comprend que l'enveloppe d'utilisation ainsi que le nombre d'heures de vol maximal du ou des turbomoteurs du giravion soient certifiés par les services officiels du pays considéré pour un spectre d'utilisation précis. Cette autorisation ne survient donc qu'à l'issue d'essais de certification complets incluant par exemple un essai d'endurance.

Ces essais de certification complets d'un turbomoteur sont réalisés pour justifier une enveloppe d'utilisation associée à un nombre d'heures de vol maximal. Il n'est alors pas possible d'utiliser le turbomoteur selon une enveloppe d'utilisation différente de l'enveloppe d'utilisation initialement autorisée, sans réaliser des essais de certification complémentaires complets très onéreux.

On comprend qu'un turbomoteur donné peut correspondre à un type de mission. Toutefois, ce turbomoteur risque de ne pas avoir un étagement optimisé des régimes de son enveloppe d'utilisation pour un type de mission alternatif.

Par exemple, une mission de sauvetage par hélitreuillage nécessite le fonctionnement d'un turbomoteur selon une enveloppe d'utilisation différente d'une enveloppe d'utilisation optimisée pour une simple mission de convoyage.

Les niveaux de puissance des régimes d'urgence sont d'autant plus sensibles qu'ils sont mis en oeuvre lorsqu'un moteur est en panne.

Ainsi, suite à une panne d'un moteur lors d'un décollage effectué à partir d'un héliport ponctuel, il est intéressant d'avoir une puissance de super urgence OEI30" élevée pour maintenir en vol l'aéronef, plutôt qu'une puissance intermédiaire d'urgence OElcont élevée.

A l'inverse, durant une phase de vol de croisière aux instruments ou un décollage réalisé à partir d'un terrain dégagé, une puissance intermédiaire d'urgence OElcont élevée parait intéressante.

Dès lors, une enveloppe d'utilisation permet la réalisation d'un type de mission mais ne permet pas a priori la réalisation d'un autre type de mission, du moins pas de manière optimisée.

Un constructeur définit alors l'enveloppe d'utilisation d'un moteur en réalisant des compromis en fonction des missions à remplir.

On connaît par ailleurs une installation motrice munie d'au moins un moteur et d'un moyen de contrôle du moteur. Le moyen de contrôle comprend une mémoire contenant des informations pour faire fonctionner le moteur selon au moins deux enveloppes d'utilisation distinctes durant un nombre d'heures de vol maximal, chaque enveloppe d'utilisation comprenant au moins deux régimes d'utilisation distincts définis chacun par une puissance développée et une durée d'utilisation de cette puissance développée, lesdites au moins deux enveloppes d'utilisation comprenant une enveloppe d'utilisation permettant d'assurer un décollage de manière optimale à partir d'une plateforme et une autre enveloppe d'utilisation permettant d'assurer un décollage de manière optimale à partir de zones de décollage n'incluant pas les plateformes.

A l'aide d'un moyen de sélection, un pilote peut choisir l'enveloppe d'utilisation à appliquer.

Selon le document FR 2 878 288, il est possible de modifier une enveloppe d'utilisation d'un turbomoteur en modifiant le nombre d'heures de vol maximal.

Selon le document FR 2 878 288, à partir d'une enveloppe d'utilisation initiale, on établit une enveloppe d'utilisation alternative. Le passage de l'enveloppe d'utilisation initiale vers l'enveloppe d'utilisation alternative se fait sans modification du nombre d'heures de vol maximal du turbomoteur mais en baissant la valeur d'un paramètre de l'enveloppe d'utilisation initiale. Par exemple, on augmente la puissance d'un régime donné, mais on baisse la durée d'utilisation de ce régime.

L'état de la technique inclut aussi les documents EP 1 281 846 et FR 2 602 270 évoquant la possibilité de réévaluer les limites d'un moteur en cas d'urgence.

On connaît aussi les documents US 2009/0186320, US 5 873 546, WO 99/51868, EP 0 816 226, et FR 2 902 408.

Selon le document US 2009/186320 A1, on détermine une marge de puissance disponible puis un biais variable relatif à la marge de puissance pour simuler une puissance réduite . Dès lors, on peut réduire de manière équivalente la puissance développée par chaque moteur ou en fonction de conditions de poids de l'aéronef.

Par suite, le document US 2009/186320 A1 décrit une enveloppe de fonctionnement et l'introduction de biais pour simuler une panne.

Le document US 5873546 A suggère aussi l'introduction de biais.

Le document WO 99/51868 A1 concerne une méthode et un dispositif pour contrôler la poussée d'un aéronef à l'aide d'un seul levier.

Le document EP 0816226 A1 présente un indicateur de pilotage. La figure 5 présente une courbe illustrant des phases de vol.

Le document FR 2902408 A1 présente un procédé pour équilibrer deux turbomoteurs.

Dans ces conditions, la présente invention a pour objet une installation motrice d'un aéronef, un aéronef, et un procédé de pilotage dudit aéronef pour permettre l'utilisation d'un même aéronef selon de multiples spectres d'utilisation sans modification de l'installation motrice de l'aéronef.

L'invention concerne alors une installation motrice d'aéronef munie d'au moins deux moteurs. Chaque moteur peut être un moteur thermique, et notamment un turbomoteur.

Chaque moteur coopère avec un moyen de contrôle qui comprend une mémoire, chaque mémoire contenant des informations pour faire fonctionner un moteur selon une pluralité d'enveloppes d'utilisation distinctes à iso-endommagement.

On comprend que l'on entend par « iso-endommagement » le fait que l'utilisation de chaque enveloppe génère une endommagement identique d'un moteur. En effet, le préfixe « iso » provient du grec « isos » signifiant « égal ».

Chaque enveloppe d'utilisation comprend alors au moins deux régimes d'utilisation d'urgence distincts à utiliser pour un moteur en fonctionnement en cas de panne d'au moins un autre moteur et définis chacun par une puissance d'urgence développée et une durée d'utilisation de cette puissance d'urgence.

Deux enveloppes d'utilisation distinctes comportent alors des régimes d'urgences distincts, un régime d'urgence d'une enveloppe d'utilisation différant d'un régime d'urgence d'une autre enveloppe d'utilisation par une puissance à développer et/ ou une durée d'utilisation de cette puissance différente(s).

Deux enveloppes d'utilisation distinctes peuvent comprendre des régimes normaux d'utilisation identiques.

Par suite, chaque mémoire peut comprendre au moins une loi de régulation d'un moteur associée à au moins une enveloppe d'utilisation.

On se référera à la littérature pour obtenir des informations sur les enveloppes d'utilisation d'un moteur et la manière de les appliquer.

Cette installation motrice est notamment remarquable en ce qu'elle comporte un moyen de détermination pour déterminer une première enveloppe d'utilisation à appliquer durant une phase de vol de décollage ainsi qu'une deuxième enveloppe d'utilisation à appliquer durant une phase de vol de croisière faisant suite à la phase de vol de décollage et une troisième enveloppe d'utilisation à appliquer durant une phase de vol d'atterrissage faisant suite à la phase de vol de croisière. Le moyen de détermination communique avec chaque moyen de contrôle pour leur indiquer la première enveloppe d'utilisation ainsi que la deuxième enveloppe d'utilisation et la troisième enveloppe d'utilisation à utiliser durant le vol, chaque mémoire comportant des instructions permettant à un moyen de contrôle d'appliquer l'enveloppe d'utilisation correspondant à la phase de vol courante pour contrôler les moteurs.

Selon une première variante, le moyen de détermination détermine la phase de vol courante et transmet cette phase de vol courante à chaque moyen de contrôle. Chaque moyen de contrôle met en oeuvre l'enveloppe d'utilisation qui correspond à cette phase de vol pour contrôler les moteurs, cette enveloppe d'utilisation étant donc soit la première enveloppe soit la deuxième enveloppe soit la troisième enveloppe.

Selon une seconde variante, chaque mémoire comporte des instructions permettant à un moyen de contrôle de déterminer la phase de vol courante et donc l'enveloppe d'utilisation à appliquer pour contrôler les moteurs.

Ainsi, chaque moteur est à même de fonctionner selon une pluralité d'enveloppes d'utilisation.

L'invention propose donc de considérer qu'un vol s'effectue selon trois phases différentes, et permet d'associer chaque phase de vol à une enveloppe d'utilisation.

Le décollage s'effectue donc en faisant fonctionner les moteurs selon une enveloppe d'utilisation dénommée « première enveloppe d'utilisation ».

Dès que l'aéronef atteint les conditions prédéterminées de la phase de vol de croisière, chaque moteur fonctionne non plus en fonction des lois de régulation résultant de la première enveloppe d'utilisation mais en fonction de lois de régulation résultant d'une autre enveloppe d'utilisation dénommée « deuxième enveloppe d'utilisation ».

Enfin, lorsque les conditions prédéterminées de la phase de vol sont atteintes, chaque moteur est piloté conformément à la dernière enveloppe d'utilisation dénommée « troisième enveloppe d'utilisation ».

En fonction de l'aire de décollage, du profil de la mission et de l'aire d'atterrissage, on peut assigner aux première, deuxième et troisième enveloppes d'utilisation des caractéristiques optimales.

Par exemple, chaque moteur peut fonctionner selon une pluralité d'enveloppes d'utilisation comprenant chacune les mêmes régimes d'urgence, tels que les premier, deuxième et troisième régimes d'urgence décrits précédemment. Par contre, la puissance développée et la durée d'utilisation d'un régime d'urgence varient d'une enveloppe d'utilisation à une autre.

Il est possible de choisir en tant que première enveloppe d'utilisation une enveloppe prévoyant une puissance de super urgence OE130" élevée au détriment d'une puissance intermédiaire d'urgence OElcont relativement faible si l'atterrissage est effectué à partir d'une plateforme en mer.

Par contre, si l'atterrissage a lieu sur un terrain dégagé, on peut choisir en tant que troisième enveloppe d'utilisation une enveloppe prévoyant une puissance intermédiaire d'urgence OElcont élevée.

L'invention permet donc d'exploiter la capacité d'un moteur à fonctionner à iso-endommagement selon une pluralité d'enveloppes d'utilisation distinctes. En effet, l'installation motrice offre à un pilote la possibilité d'utiliser les moteurs de l'aéronef selon une enveloppe d'utilisation adaptée à la phase de vol courante et à la mission à réaliser.

Cette installation motrice peut de plus comporter une ou plusieurs des caractéristiques additionnelles qui suivent.

Par exemple, l'installation motrice peut comporter un premier système pour déterminer une vitesse de l'aéronef et un deuxième système pour déterminer une altitude et / ou une hauteur de l'aéronef selon la variante. De plus, le premier système et le deuxième système sont soit reliés à chaque moyen de contrôle soit reliés au moyen de détermination pour la détermination de la phase de vol courante.

Ainsi, le passage de la phase de vol de décollage à la phase de vol de croisière peut s'effectuer à partir d'une première vitesse seuil et d'une première altitude et / ou hauteur seuil.

De même, le passage de la phase de vol de croisière à la phase de vol d'atterrissage peut s'effectuer à partir d'une deuxième vitesse seuil et d'une deuxième altitude seuil, ou d'une deuxième vitesse seuil et d'une deuxième hauteur seuil.

Par ailleurs, selon un premier mode de réalisation, chaque mémoire comporte une liste préétablie d'enveloppes d'utilisation des moteurs, le moyen de détermination ayant pour fonction de permettre le choix de la première enveloppe d'utilisation ainsi que de la deuxième enveloppe d'utilisation et de la troisième enveloppe d'utilisation à partir de ladite liste.

Le constructeur établit donc un catalogue d'enveloppes d'utilisation pouvant être utilisées en vol, ces enveloppes d'utilisation constituant ladite liste préétablie.

Un pilote peut sélectionner trois enveloppes d'utilisation contenues dans ce catalogue pour respectivement les affecter à la première enveloppe d'utilisation ainsi qu'à la deuxième enveloppe d'utilisation et à la troisième enveloppe d'utilisation.

Selon la variante, la liste d'enveloppes d'utilisation est mémorisée :
- au sein du moyen de détermination et dans chaque mémoire,
- au sein d'un moyen de stockage accessible au moyen de détermination et dans chaque mémoire, ou
- uniquement dans lesdites mémoires, le moyen de détermination ayant accès à ces mémoires.

On comprend que l'ensemble des enveloppes d'utilisation du catalogue est certifié par le constructeur.

De plus, toutes les enveloppes d'utilisation de la liste et leurs caractéristiques peuvent être inscrites dans le manuel de vol pour aider le pilote à faire son choix.

Selon un deuxième mode de réalisation, le moyen de détermination comporte un dispositif de paramétrage pour définir des paramètres de mission.

De plus, selon une première variante, le moyen de détermination comporte un calculateur pour déterminer la première enveloppe d'utilisation ainsi que la deuxième enveloppe d'utilisation et la troisième enveloppe d'utilisation à partir d'une enveloppe générique en fonction desdits paramètres de mission.

Selon une deuxième variante, le moyen de détermination transmet les paramètres de mission à chaque moyen de contrôle, chaque moyen de contrôle finalisant l'élaboration de la première enveloppe d'utilisation ainsi que de la deuxième enveloppe d'utilisation et de la troisième enveloppe d'utilisation à partir d'une enveloppe générique en fonction desdits paramètres de mission.

Dès lors, un constructeur établit une enveloppe générique contenant les régimes d'urgence utilisables et des taux d'échanges entre les régimes.

A titre d'exemple, un tel taux d'échange peut indiquer qu'une augmentation de 50 Watt d'une puissance d'urgence équivaut à une réduction de 10 Watt d'une autre puissance d'urgence sans impact sur leur durée d'utilisation.

En fonction des paramètres de mission, le calculateur définit à partir de l'enveloppe générique les trois enveloppes d'utilisation à associer respectivement à la première enveloppe d'utilisation ainsi qu'à la deuxième enveloppe d'utilisation et à la troisième enveloppe d'utilisation.

De tels paramètres de mission peuvent inclure la durée du vol, la distance à parcourir, la consommation en carburant à atteindre, la masse de l'aéronef, l'altitude de vol en croisière, la température, le vent, les caractéristiques des aires d'atterrissage et de décollage par exemple.

Il est à noter que, lorsque la première enveloppe d'utilisation ainsi que la deuxième enveloppe d'utilisation et la troisième enveloppe d'utilisation sont entièrement élaborées par le moyen de détermination, chaque unité de contrôle peut par sécurité vérifier la cohérence des enveloppes d'utilisation produites par le moyen de détermination, en vérifiant par exemple que les taux d'échange sont respectés.

Selon un autre aspect, l'installation motrice peut comporter un moyen d'affichage pour afficher au moins une donnée relative à l'enveloppe d'utilisation courante appliquée, par exemple la puissance maximale prévue par cette enveloppe d'utilisation courante et la durée d'utilisation de cette puissance.

Outre une installation motrice, l'invention vise aussi un aéronef comportant une telle installation motrice, et en particulier un aéronef à voilure tournante.

L'invention vise aussi un procédé de pilotage d'un tel aéronef muni d'une installation motrice qui comporte une pluralité de moteurs et un moyen de contrôle par moteur. Chaque moyen de contrôle comporte une mémoire, chaque mémoire contenant des informations pour faire fonctionner un moteur selon une pluralité d'enveloppes d'utilisation distinctes à iso-endommagement.

Chaque enveloppe d'utilisation comprend en outre au moins deux régimes d'utilisation d'urgence distincts à utiliser pour un moteur en fonctionnement en cas de panne d'au moins un autre moteur et définis chacun par une puissance d'urgence développée et une durée d'utilisation de cette puissance d'urgence.

Au cours de ce procédé :
- on détermine une première enveloppe d'utilisation à appliquer durant une phase de vol de décollage ainsi qu'une deuxième enveloppe d'utilisation à appliquer durant une phase de vol de croisière faisant suite à la phase de vol de décollage et une troisième enveloppe d'utilisation à appliquer durant une phase de vol d'atterrissage faisant suite à la phase de vol de croisière,
- on détermine la phase de vol en cours,
- on applique l'enveloppe d'utilisation correspondant à la phase de vol courante pour contrôler les moteurs.

Ce procédé peut de plus comporter une ou plusieurs des caractéristiques additionnelles qui suivent.

Par exemple, lorsqu'un régime d'urgence est mis en oeuvre, on conserve l'enveloppe d'utilisation courante jusqu'à l'atterrissage de l'aéronef.

En effet, deux enveloppes d'utilisation distinctes induisent un endommagement identique.

Toutefois, il n'en va pas nécessairement de même pour deux régimes d'urgence distincts. Pour éviter de mettre des compteurs d'endommagement, cette variante propose de finir le vol avec l'enveloppe d'utilisation courante.

Selon un autre aspect, on autorise la modification en vol de l'enveloppe d'utilisation à appliquer durant une phase de vol donnée uniquement avant le début de cette phase de vol donnée.

Par exemple, un pilote peut dérouter l'aéronef durant la phase de vol de croisière sur une nouvelle aire d'atterrissage. Ce pilote assigne alors à la troisième enveloppe d'utilisation une nouvelle enveloppe d'utilisation adaptée à la nouvelle aire d'atterrissage.

Par ailleurs, deux enveloppes d'utilisation à choisir parmi la première enveloppe d'utilisation, la deuxième enveloppe d'utilisation et la troisième enveloppe d'utilisation peuvent être identiques.

Par exemple, la première enveloppe d'utilisation et la troisième enveloppe d'utilisation peuvent être identiques, notamment si la zone d'atterrissage et la zone de décollage sont identiques.

En outre, selon un premier mode de réalisation un moyen de stockage comportant une liste préétablie d'enveloppes d'utilisation, on choisit la première enveloppe d'utilisation ainsi que la deuxième enveloppe d'utilisation et la troisième enveloppe d'utilisation à partir de ladite liste.

Selon un deuxième mode de réalisation, une enveloppe générique comportant des taux d'échange entre deux régimes distincts, on détermine des paramètres d'une mission puis on génère la première enveloppe d'utilisation ainsi que la deuxième enveloppe d'utilisation et la troisième enveloppe d'utilisation à partir de cette enveloppe générique en fonction desdits paramètres.

L'invention et ses avantages apparaîtront avec plus de détails dans le cadre de la description qui suit avec des exemples de réalisation donnés à titre illustratif en référence aux figures annexées qui représentent :
- la figure 1, un schéma explicitant le procédé mis en oeuvre,
- la figure 2, un diagramme présentant les phases de vol prises en considération,
- la figure 3, un aéronef selon un premier mode de réalisation, et
- la figure 4, un aéronef selon un deuxième mode de réalisation.

Les éléments présents dans plusieurs figures distinctes sont affectés d'une seule et même référence.

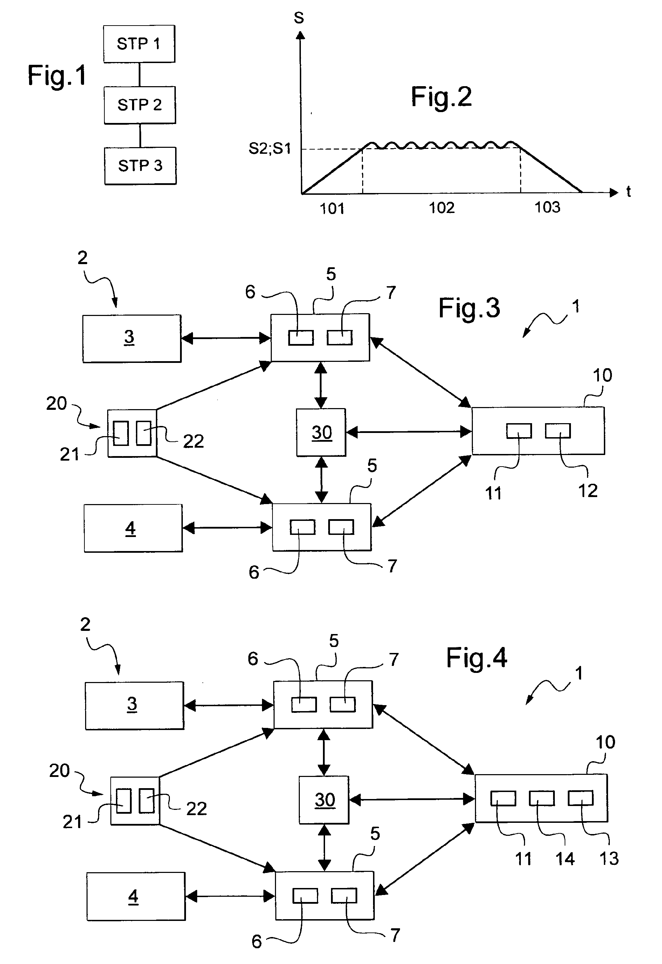

La figure 1 explicite un procédé de pilotage d'un aéronef, cet aéronef comportant au moins deux moteurs.

Selon une première étape STP1, un pilote détermine:
- une première enveloppe d'utilisation 101 à appliquer durant une phase de vol de décollage,
- une deuxième enveloppe d'utilisation 102 à appliquer durant une phase de vol de croisière faisant suite à la phase de vol de décollage, et
- une troisième enveloppe d'utilisation 103 à appliquer durant une phase de vol d'atterrissage faisant suite à la phase de vol de croisière.

Chaque enveloppe d'utilisation comporte les mêmes régimes normaux d'utilisation et les mêmes régimes d'urgence à utiliser en cas de panne d'un moteur. Les différents régimes de l'art antérieur peuvent être implémentés, à savoir par exemple un régime de décollage, un régime maximal continu, un premier régime d'urgence, un deuxième régime d'urgence et un troisième régime d'urgence.

Cependant, chaque régime de fonctionnement définit une puissance que chaque moteur peut développer et une durée d'utilisation de cette puissance.

Dès lors, la puissance et/ou la durée d'utilisation d'un régime d'urgence d'une enveloppe d'utilisation diffère de la puissance et/ou de la durée d'utilisation de ce régime d'urgence pour une autre enveloppe d'utilisation.

La première enveloppe d'utilisation, la deuxième enveloppe d'utilisation et la troisième enveloppe d'utilisation peuvent être définies et fixées avant le vol en tant que tel, à savoir avant le décollage.

Cependant, selon une variante, il est possible de modifier la première et/ou la deuxième et/ ou la troisième enveloppe d'utilisation tant que l'enveloppe d'utilisation en question n'a pas été mise en oeuvre.

Par exemple durant la phase de décollage, on peut assigner une nouvelle enveloppe d'utilisation à la deuxième enveloppe d'utilisation où à la troisième enveloppe d'utilisation.

De plus, chaque enveloppe d'utilisation génère le même endommagement et donc le même nombre d'heures de vol maximal TBO.

Si un moteur tombe en panne, chaque moteur en activité fonctionne alors selon un régime d'urgence.

Dès lors, selon une variante, on impose à chaque moteur en fonctionnement de mettre en oeuvre l'enveloppe d'utilisation courante jusqu'à la fin de vol.

Par exemple, si un moteur tombe en panne durant la phase de vol de croisière et donc lors de l'utilisation de la deuxième enveloppe d'utilisation, l'atterrissage est effectué en mettant en oeuvre cette deuxième enveloppe d'utilisation et non pas la troisième enveloppe d'utilisation.

Selon le premier mode de réalisation, le constructeur établit une liste d'enveloppes d'utilisation des moteurs. Un pilote choisit alors parmi cette liste les enveloppes d'utilisation devant constituer les première, deuxième et troisième enveloppes d'utilisation.

Selon un deuxième mode de réalisation, un constructeur établit une enveloppe générique, cette enveloppe générique associant chaque régime d'urgence à au moins un taux d'échange avec un autre régime d'urgence.

Le pilote établit alors des paramètres de la mission. La première enveloppe d'utilisation, la deuxième enveloppe d'utilisation et la troisième enveloppe d'utilisation sont alors générées à partir de l'enveloppe générique et des paramètres de mission.

Par exemple, l'enveloppe générique comporte :
- un premier régime d'urgence définissant une première puissance et une première durée d'utilisation,
- un deuxième régime d'urgence définissant une deuxième puissance et une deuxième durée d'utilisation,
- un troisième régime d'urgence définissant une troisième puissance et une troisième durée d'utilisation.

De plus, un premier taux d'échange indique à titre d'exemple qu'une augmentation donnée de la première puissance induit une diminution donnée de la deuxième puissance et inversement, ainsi qu'aucun changement sur le troisième régime d'urgence

Dès lors, les caractéristiques d'une zone de décollage peuvent induire une maximisation de la première puissance.

La première enveloppe d'utilisation est alors élaborée pour contenir selon cet exemple :
- un premier régime d'urgence définissant une première puissance maximisée et la première durée d'utilisation,
- un deuxième régime d'urgence définissant une deuxième puissance minimisée conformément au premier taux d'échange, et une deuxième durée d'utilisation,
- un troisième régime d'urgence définissant une troisième puissance et une troisième durée d'utilisation.

La phase de vol de croisière peut être une phase de vol classique. La deuxième enveloppe d'utilisation est alors identique à l'enveloppe générique.

Enfin, les caractéristiques de la zone d'atterrissage peuvent induire une maximisation de la deuxième puissance d'urgence.

La troisième enveloppe d'utilisation est alors élaborée pour contenir :
- un premier régime d'urgence définissant une première puissance minimisée conformément au premier taux d'échange et la première durée d'utilisation,
- un deuxième régime d'urgence définissant une deuxième puissance maximisée, et une deuxième durée d'utilisation,
- un troisième régime d'urgence définissant une troisième puissance et une troisième durée d'utilisation.

Indépendamment du mode de réalisation, on comprend que deux enveloppes d'utilisation à choisir parmi la première enveloppe d'utilisation, la deuxième enveloppe d'utilisation et la troisième enveloppe d'utilisation peuvent être identiques.

Selon une deuxième étape STP2, on détermine en vol la phase de vol en cours.

Dès lors, durant une troisième étape STP3, on applique l'enveloppe d'utilisation associée à la phase de vol courante.

La figure 2 présente un diagramme pour clarifier ce procédé. Ce diagramme comporte en abscisse le temps, et en ordonnée un seuil délimitant chaque phase de vol.

Au décollage, chaque moteur fonctionne selon une première enveloppe d'utilisation 101.

Si un moteur tombe en panne, les moteurs en fonctionnement appliquent chacun un même régime d'urgence de la première enveloppe d'utilisation pour le reste du vol. Cette panne peut alors mettre fin à la mission.

En l'absence de panne et lorsque l'aéronef atteint un premier seuil S1 déterminé par le constructeur, l'aéronef évolue dans une phase de vol de croisière. On requiert donc le fonctionnement de chaque moteur selon non plus la première enveloppe d'utilisation 101, mais selon la deuxième enveloppe d'utilisation 102.

Le premier seuil peut comprendre une première altitude seuil et une première vitesse d'avancement seuil.

Ainsi, l'aéronef évolue dans la phase de vol de croisière lorsque la première altitude seuil et la première vitesse d'avancement seuil sont dépassées.

Selon une autre variante, l'altitude seuil est remplacée par une hauteur seuil.

Si un moteur tombe en panne, les moteurs en fonctionnement appliquent chacun un même régime d'urgence de la deuxième enveloppe d'utilisation pour le reste du vol. Cette panne peut alors mettre fin à la mission.

En l'absence de panne et lorsque l'aéronef atteint un deuxième seuil S2 déterminé par le constructeur, l'aéronef évolue dans une phase de vol d'atterrissage. On requiert donc le fonctionnement de chaque moteur selon non plus la deuxième enveloppe d'utilisation 102, mais selon la troisième enveloppe d'utilisation 103.

La figure 3 présente un aéronef 1 selon un premier mode de réalisation.

Indépendamment du mode de réalisation, l'aéronef 1 comporte une installation motrice 2.

Cette installation motrice 2 est équipée d'au moins deux moteurs 3, 4, chaque moteur 3, 4 étant contrôlé par un moyen de contrôle 5.

Dès lors, chaque moyen de contrôle 5 possède une mémoire 6 et un moyen de calcul 7. Chaque mémoire 6 inclut notamment des informations pour piloter le moteur 3, 4 lui étant associé selon une première enveloppe d'utilisation 101, une deuxième enveloppe d'utilisation 102 et une troisième enveloppe d'utilisation 103. On rappelle que chaque enveloppe d'utilisation comprend au moins deux régimes d'utilisation d'urgence distincts qui sont définis chacun par une puissance d'urgence développée et une durée d'utilisation de cette puissance d'urgence.

Par exemple, pour chaque régime de chaque enveloppe d'utilisation mémorisée, la mémoire 6 comporte au moins une loi de régulation mise en oeuvre par un moyen de calcul 7 pour commander l'alimentation en carburant du moteur.

Le moyen de calcul 7 de chaque moyen de contrôle commande ainsi le moteur 3, 4 lui étant affecté, en appliquant au moins une loi de régulation résultant d'un régime de fonctionnement de l'enveloppe d'utilisation à appliquer.

Un tel moyen de contrôle 5 est parfois connu sous l'acronyme FADEC.

On se référera à la littérature pour connaître le fonctionnement d'un tel moyen de contrôle.

Selon l'invention, l'installation motrice est munie d'un moyen de détermination 10 pour pouvoir déterminer une première enveloppe d'utilisation 101 à appliquer durant une phase de vol de décollage, ainsi qu'une deuxième enveloppe d'utilisation 102 à appliquer durant une phase de vol de croisière et une troisième enveloppe d'utilisation 103 à appliquer durant une phase de vol d'atterrissage.

Le moyen de détermination 10 est relié à chaque moyen de contrôle pour participer à l'élaboration des première, deuxième et troisième enveloppes d'utilisation 101, 102, 103 à appliquer durant le vol. Ce moyen de détermination peut soit indiquer aux moyens de contrôle les première, deuxième et troisième enveloppes d'utilisation 101, 102, 103 à appliquer durant le vol, soit fournir des informations aux moyens de contrôle leur permettant de déterminer les première, deuxième et troisième enveloppes d'utilisation 101, 102, 103.

En outre, chaque mémoire 6 peut comporter des instructions exécutables par le moyen de calcul 7 correspondant pour déterminer la phase de vol courante, et en conséquence l'enveloppe d'utilisation à mettre en oeuvre.

De manière alternative, la phase de vol courante est établie par le moyen de détermination.

A cet effet, l'aéronef 1 peut être pourvu d'un système de mesure 20 pour mesurer des données relatives à la phase de vol courante.

Le système de mesure 20 schématisé inclut un premier système 21 pour déterminer une vitesse de l'aéronef, et notamment la vitesse d'avancement de l'aéronef.

De plus, ce système de mesure 20 inclut un deuxième système 22 pour déterminer une altitude de l'aéronef.

Le premier système 21 et le deuxième système 22 sont alors tous deux reliés à chaque moyen de contrôle 5, où au moyen de détermination selon la variante.

On se référera à la littérature pour obtenir des informations relatives à de tels premier système 21 et deuxième système 22.

Selon un autre aspect, l'installation motrice présentée comporte un moyen d'affichage 30.

Le moyen d'affichage 30 communique avec les moyens de contrôle 5 pour afficher au moins une donnée relative à l'enveloppe d'utilisation courante. Par exemple, le moyen d'affichage 30 affiche la puissance associée au régime de l'enveloppe d'utilisation courante mis en oeuvre, ainsi que le temps d'utilisation restant de ce régime.

Selon le premier mode de réalisation, le moyen de détermination 10 comporte un moyen de sélection manoeuvrable par un opérateur ainsi qu'un moyen de stockage d'informations 11.

Ce moyen de stockage d'informations 11 peut être une des mémoires 6 des moyens de contrôle 5.

Le moyen de stockage contient donc une liste d'enveloppes d'utilisation pouvant constituer la première enveloppe d'utilisation 101, la deuxième enveloppe d'utilisation 102 et la troisième enveloppe d'utilisation 103.

Un opérateur, par exemple un pilote, manoeuvre alors le moyen de sélection pour affecter des enveloppes d'utilisation de la liste à la première enveloppe d'utilisation 101, à la deuxième enveloppe d'utilisation 102 et à la troisième enveloppe d'utilisation 103.

Le moyen de détermination peut comprendre un système d'affichage présentant les enveloppes d'utilisation de ladite liste, ou par exemple communiquer avec le moyen d'affichage 30 à cet effet.

La sélection d'enveloppes d'utilisation à l'aide du moyen de détermination 10 se fait au sol, et éventuellement en vol conformément à la variante explicitée précédemment.

Le moyen de détermination 10 informe chaque moyen de contrôle en leur indiquant les enveloppes d'utilisation à associer aux première, deuxième et troisième enveloppes d'utilisation.

Chaque moyen de contrôle pilote alors le moteur correspondant en appliquent la ou les loi(s) de régulation découlant de l'enveloppe d'utilisation à appliquer, ces lois de régulation étant mémorisées dans la mémoire 6 de chaque moyen de contrôle

Selon un deuxième mode de réalisation représenté sur la figure 4, le moyen de détermination 10 comporte un dispositif de paramétrage 13 manoeuvrable par un opérateur, un moyen de stockage d'informations 11 et un calculateur 14.

Ce moyen de stockage 11, éventuellement confondu avec une mémoire 6 contient une enveloppe générique.

Un opérateur saisit alors les paramètres de la mission dénommés par commodité « paramètres de mission », à l'aide du dispositif de paramétrage. Un tel dispositif de paramétrage peut comprendre par exemple un clavier et/ou une « souris » ou équivalent.

Le calculateur 14 reçoit ces paramètres de mission et en déduit automatiquement la première enveloppe d'utilisation, la deuxième enveloppe d'utilisation et la troisième enveloppe d'utilisation.

Cette phase d'élaboration peut être réalisée à l'aide de taux d'échange de l'enveloppe générique, et de règles de construction définies par le constructeur.

Le moyen de détermination fournit alors les caractéristiques de la première enveloppe d'utilisation, de la deuxième enveloppe d'utilisation et de la troisième enveloppe d'utilisation à chaque moyen de contrôle, à savoir la puissance et la durée d'utilisation de chaque régime de ces enveloppes d'utilisation voire les lois de régulation en découlant.

Les moyens de contrôle peuvent éventuellement vérifier la cohérence des informations transmises.

Selon une autre variante, les paramètres de mission sont transmis à chaque moyen de contrôle, chaque moyen de contrôle en déduisant la première enveloppe d'utilisation, la deuxième enveloppe d'utilisation et la troisième enveloppe d'utilisation.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Installation motrice (2) d'aéronef munie d'au moins deux moteurs (3, 4), chaque moteur (3, 4) coopérant avec un moyen de contrôle (5) qui comprend une mémoire (6), chaque mémoire (6) contenant des informations pour faire fonctionner ledit moteur (3, 4) selon une pluralité d'enveloppes d'utilisation distinctes à iso-endommagement, chaque enveloppe d'utilisation comprenant au moins deux régimes d'utilisation d'urgence distincts à utiliser pour un moteur en fonctionnement en cas de panne d'au moins un autre moteur (3, 4) et définis chacun par une puissance d'urgence développée et une durée d'utilisation de cette puissance d'urgence,
**caractérisée en ce que** ladite installation motrice (2) comporte un moyen de détermination (10) pour déterminer une première enveloppe d'utilisation (101) à appliquer durant une phase de vol de décollage ainsi qu'une deuxième enveloppe d'utilisation (102) à appliquer durant une phase de vol de croisière faisant suite à la phase de vol de décollage et une troisième enveloppe d'utilisation (103) à appliquer durant une phase de vol d'atterrissage faisant suite à la phase de vol de croisière, ledit moyen de détermination (10) communiquant avec chaque moyen de contrôle (5) pour leur indiquer la première enveloppe d'utilisation (101) ainsi que la deuxième enveloppe d'utilisation (102) et la troisième enveloppe d'utilisation (103) à utiliser durant le vol, chaque mémoire (6) comportant des instructions permettant à un moyen de contrôle (5) d'appliquer l'enveloppe d'utilisation correspondant à la phase vol courante pour contrôler les moteurs.

2. Installation motrice selon la revendication 1,
**caractérisée en ce que** l'installation motrice (2) comporte un premier système (21) pour déterminer une vitesse de l'aéronef et un deuxième système (22) pour déterminer une altitude ou une hauteur de l'aéronef.

3. Installation motrice selon l'une quelconque des revendications 1 à 2,
**caractérisée en ce que** ladite mémoire (6) comporte une liste préétablie d'enveloppes d'utilisation des moteurs, ledit moyen de détermination (10) ayant pour fonction de permettre le choix de la première enveloppe d'utilisation (101) ainsi que de la deuxième enveloppe d'utilisation (102) et de la troisième enveloppe d'utilisation (103) à partir de ladite liste.

4. Installation motrice selon l'une quelconque des revendications 1 à 2,
**caractérisée en ce que** ledit moyen de détermination (10) comporte un dispositif de paramétrage (13) pour définir des paramètres de mission.

5. Installation motrice selon la revendication 4,
**caractérisée en ce que** ledit moyen de détermination (10) comporte un calculateur (14) pour déterminer la première enveloppe d'utilisation (101) ainsi que la deuxième enveloppe d'utilisation (102) et la troisième enveloppe d'utilisation (103) à partir d'une enveloppe générique en fonction desdits paramètres de mission.

6. Installation motrice selon l'une quelconque des revendications 1 à 5,
**caractérisée en ce que** ladite installation motrice (2) comporte un moyen d'affichage (30) pour afficher au moins une donnée relative à l'enveloppe d'utilisation courante appliquée.

7. Aéronef (1),
**caractérisée en ce que** cet aéronef (1) comporte une installation motrice (2) selon l'une quelconque des revendications 1 à 6.

8. Procédé de pilotage d'un aéronef (1) muni d'une installation motrice (2) comportant une pluralité de moteurs (3, 4) et un moyen de contrôle (10) par moteur (3, 4), chaque moyen de contrôle comportant une mémoire (6), chaque mémoire (6) contenant des informations pour faire fonctionner un moteur (3, 4) selon une pluralité d'enveloppes d'utilisation distinctes à iso-endommagement, chaque enveloppe d'utilisation comprenant au moins deux régimes d'utilisation d'urgence distincts à utiliser en cas de panne d'au moins un autre moteur et définis chacun par une puissance d'urgence développée et une durée d'utilisation de cette puissance d'urgence
**caractérisé en ce que** :
- on détermine une première enveloppe d'utilisation (101) à appliquer durant une phase de vol de décollage ainsi qu'une deuxième enveloppe d'utilisation (102) à appliquer durant une phase de vol de croisière faisant suite à la phase de vol de décollage et une troisième enveloppe d'utilisation (103) à appliquer durant une phase de vol d'atterrissage faisant suite à la phase de vol de croisière,
- on détermine la phase de vol en cours,
- on applique l'enveloppe d'utilisation correspondant à la phase de vol courante pour contrôler les moteurs (3, 4).

9. Procédé selon la revendication 8,
**caractérisé en ce que**, lorsqu'un régime d'urgence est mis en oeuvre, on conserve l'enveloppe d'utilisation courante jusqu'à l'atterrissage de l'aéronef (1).

10. Procédé selon la revendication 8,
**caractérisé en ce qu**'on autorise la modification en vol d'une enveloppe d'utilisation à appliquer durant une phase de vol donnée uniquement avant le début de cette phase de vol donnée.

11. Procédé selon la revendication 8,
**caractérisé en ce que** deux enveloppes d'utilisation à choisir parmi la première enveloppe d'utilisation (101) et la deuxième enveloppe d'utilisation (102) et la troisième enveloppe d'utilisation (103) sont identiques.

12. Procédé selon la revendication 8,
**caractérisé en ce que,** au moins un moyen de stockage (11) comportant une liste préétablie d'enveloppes d'utilisation, on choisit la première enveloppe d'utilisation ainsi que la deuxième enveloppe d'utilisation et la troisième enveloppe d'utilisation à partir de ladite liste.

13. Procédé selon la revendication 8,
**caractérisé en ce que**, une enveloppe générique comportant des taux d'échange entre deux régimes distincts, on détermine des paramètres d'une mission puis on génère la première enveloppe d'utilisation ainsi que la deuxième enveloppe d'utilisation et la troisième enveloppe d'utilisation à partir de cette enveloppe générique en fonction desdits paramètres.

## Patentansprüche

1. Triebwerk (2) eines Flugzeugs mit mindestens zwei Motoren (3, 4), wobei jeder Motor (3, 4) mit einem Mittel zur Steuerung (5) zusammenwirkt, das einen Speicher (6) aufweist, wobei der Speicher Informationen für den Betrieb des Motors (3, 4) in einer Mehrzahl von unterschiedlichen Betriebsbereichen bei Isoschäden enthält, wobei jeder Betriebsbereich mindestens zwei verschiedene Notarbeitsbereiche aufweist, die für einen Motor einzusetzen sind, der im Fall eines Defekts mindestens eines anderen Motors (3, 4) betrieben wird, und die jeweils durch eine entwickelte Notleistung und eine Betriebsdauer dieser Notleistung definiert sind,
**dadurch gekennzeichnet, dass** das Triebwerk (2) ein Bestimmungsmittel (10) aufweist zum Bestimmen eines ersten Betriebsbereichs (101), der während einer Startphase anzuwenden ist, sowie eines zweiten Betriebsbereichs (102), der während einer Reiseflugphase anzuwenden ist, die auf die Startphase folgt, und eines dritten Betriebsbereichs (103), der während einer Landephase anzuwenden ist, die sich an die Reisephase anschließt, wobei das Bestimmungsmittel (10) mit jedem Steuermittel (5) kommuniziert, um den ersten Betriebsbereich (101) sowie den zweiten Betriebsbereich (102) und den dritten Betriebsbereich (103), der während des Flugs anzuwenden ist, anzuzeigen, wobei jeder Speicher (6) Befehle aufweist, die es einem Steuermittel (5) ermöglichen, den der aktuellen Flugphase entsprechenden Betriebsbereich anzuwenden, um die Motoren zu steuern.

2. Triebwerk nach Anspruch 1,
**dadurch gekennzeichnet, dass** das Triebwerk (2) ein erstes System (21) zur Bestimmung der Geschwindigkeit des Flugzeugs und ein zweites System (22) zur Bestimmung einer Flughöhe oder einer Höhe des Flugzeugs aufweist.

3. Triebwerk nach einem der Ansprüche 1 bis 2,
**dadurch gekennzeichnet, dass** der Speicher (6) eine vorher festgelegte Liste von Betriebsbereichen der Motoren aufweist, wobei das Bestimmungsmittel (10) die Funktion hat, die Wahl des ersten Betriebsbereichs (101) sowie des zweiten Betriebsbereichs (102) und des dritten Betriebsbereichs (103) ausgehend von der Liste zu ermöglichen.

4. Triebwerk nach einem der Ansprüche 1 bis 2,
**dadurch gekennzeichnet, dass** das Bestimmungsmittel (10) eine Parametrisierungsvorrichtung (13) aufweist, um die Einsatzparameter zu definieren.

5. Triebwerk nach Anspruch 4,
**dadurch gekennzeichnet, dass** das Bestimmungsmittel (10) einen Rechner (14) aufweist zum Bestimmen des ersten Betriebsbereichs (101) sowie des zweiten Betriebsbereichs (102) und des dritten Betriebsbereichs (103), ausgehend von einem allgemeinen Betriebsbereich in Abhängigkeit von den Einsatzparametern.

6. Triebwerk nach einem der Ansprüche 1 bis 5,
**dadurch gekennzeichnet, dass** das Triebwerk (2) ein Anzeigemittel (30) aufweist, um mindestens eine Größe bezüglich des aktuell angewendeten Betriebsbereichs anzuzeigen.

7. Flugzeug (1),
**dadurch gekennzeichnet, dass** dieses Flugzeug (1) ein Triebwerk (2) nach einem der Ansprüche 1 bis 6 aufweist.

8. Verfahren zur Steuerung eines Flugzeugs (1), welches mit einem Triebwerk (2) ausgerüstet ist, das eine Mehrzahl von Motoren (3, 4) und ein Steuermittel (10) pro Motor (3, 4) aufweist, wobei jedes Steuermittel einen Speicher (6) aufweist, wobei jeder Speicher (6) Informationen für den Betrieb eines Motors (3, 4) in einer Mehrzahl von unterschiedlichen Betriebsbereichen bei Isoschäden enthält, wobei jeder Betriebsbereich mindestens zwei unterschiedliche Notarbeitsbereiche aufweist, die im Falle eines Defektes mindestens eines anderen Motors anzuwenden sind und die jeweils durch eine entwickelte Notleistung und eine Dauer der Anwendung dieser Notleistung definiert sind,
**dadurch gekennzeichnet, dass**:
- ein erster Betriebsbereich (101) definiert wird, der während einer Startphase anzuwenden ist, sowie ein zweiter Betriebsbereich (102), der während einer Reiseflugphase anzuwenden ist, die auf die Startphase folgt, und einen dritten Betriebsbereich (103), der während einer Landeanflugphase anzuwenden ist, die auf die Reiseflugphase folgt,
- die aktuelle Flugphase bestimmt wird,
- der Betriebsbereich angewendet wird, der der aktuellen Flugphase entspricht, um die Motoren (3, 4) zu steuern.

9. Verfahren nach Anspruch 8,
**dadurch gekennzeichnet, dass** während ein Notbetriebsbereich angewendet wird, der aktuelle Betriebsbereich beibehalten wird bis zur Landung des Flugzeugs (1).

10. Verfahren nach Anspruch 8,
**dadurch gekennzeichnet, dass** die Änderung eines Betriebsbereichs, der während einer gegebenen Flugphase anzuwenden ist, während des Fluges ausschließlich vor dem Beginn dieser gegebenen Flugphase autorisiert wird.

11. Verfahren nach Anspruch 8,
**dadurch gekennzeichnet, dass** zwei Betriebsbereiche, die aus dem ersten Betriebsbereich (101) und dem zweiten Betriebsbereich (102) und dem dritten Betriebsbereich (103) auszuwählen sind, identisch sind.

12. Verfahren nach Anspruch 8,
**dadurch gekennzeichnet, dass** mindestens ein Speichermittel (11) vorgesehen ist, das eine vorher festgelegte Liste von Betriebsbereichen aufweist, und der erste Betriebsbereich sowie der zweite Betriebsbereich und der dritte Betriebsbereich ausgehend von dieser Liste ausgewählt wird.

13. Verfahren nach Anspruch 8,
**dadurch gekennzeichnet, dass** ein allgemeiner Betriebsbereich vorgesehen ist, der Wechselraten zwischen zwei unterschiedlichen Arbeitsbereichen aufweist, wobei Parameter eines Einsatzes bestimmt werden und anschließend der erste Betriebsbereich sowie der zweite Betriebsbereich und der dritte Betriebsbereich ausgehend von diesem allgemeinen Betriebsbereich in Abhängigkeit von den Parametern erzeugt werden.

## Claims

1. An aircraft power plant (2) provided with at least two engines (3, 4), each engine (3, 4) cooperating with a control means (5) which comprises a memory (6), each memory (6) containing information for operating said engine (3, 4) in accordance with a plurality of distinct iso-damage utilisation envelopes, each utilisation envelope comprising at least two distinct contingency utilisation ratings for use for an engine which is in operation in the event of at least one other engine (3, 4) failing, and each defined by a developed contingency power and a duration of utilisation of this contingency power,
**characterised in that** said power plant (2) comprises a determination means (10) for determining a first utilisation envelope (101) to be applied during a takeoff flight phase and also a second utilisation envelope (102) to be applied during a cruising flight phase following on from the takeoff flight phase and a third utilisation envelope (103) to be applied during a landing flight phase following on from the cruising flight phase, said determination means (10) communicating with each control means (5) in order to indicate to it the first utilisation envelope (101) and also the second utilisation envelope (102) and the third utilisation envelope (103) to be used during the flight, each memory (6) comprising instructions enabling a control means (5) to apply the utilisation envelope corresponding to the current flight phase in order to control the engines.

2. A power plant according to Claim 1,
**characterised in that** the power plant (2) comprises a first system (21) for determining a speed of the aircraft and a second system (22) for determining an altitude or a height of the aircraft.

3. A power plant according to any one of Claims 1 to 2,
**characterised in that** said memory (6) comprises a pre-established list of utilisation envelopes for the engines, said determination means (10) having the function of making it possible to select the first utilisation envelope (101) and also the second utilisation envelope (102) and the third utilisation envelope (103) from said list.

4. A power plant according to any one of Claims 1 to 2,
**characterised in that** said determination means (10) comprises a parameter-setting device (13) for defining mission parameters.

5. A power plant according to Claim 4,
**characterised in that** said determination means (10) comprises a computer (14) for determining the first utilisation envelope (101) and also the second utilisation envelope (102) and the third utilisation envelope (103) from a generic envelope as a function of said mission parameters.

6. A power plant according to any one of Claims 1 to 5,
**characterised in that** said power plant (2) comprises a display means (30) for displaying at least one item of data relating to the current utilisation envelope which is being applied.

7. An aircraft (1),
**characterised in that** this aircraft (1) comprises a power plant (2) according to any one of Claims 1 to 6.

8. A method of piloting an aircraft (1) provided with a power plant (2) comprising a plurality of engines (3, 4) and one control means (10) per engine (3, 4), each control means comprising a memory (6), each memory (6) containing information for operating an engine (3, 4) according to a plurality of distinct iso-damage utilisation envelopes, each utilisation envelope comprising at least two distinct contingency utilisation ratings for use in the event of at least one other engine failing, and each defined by a developed contingency power and a duration of utilisation of this contingency power,
**characterised in that**:
- a first utilisation envelope (101) to be applied during a takeoff flight phase and also a second utilisation envelope (102) to be applied during a cruising flight phase following on from the takeoff flight phase and a third utilisation envelope (103) to be applied during a landing flight phase following on from the cruising flight phase are determined,
- the current flight phase is determined,
- the utilisation envelope corresponding to the current flight phase is applied in order to control the engines (3, 4).

9. A method according to Claim 8,
**characterised in that**, when a contingency rating is implemented, the current utilisation envelope is retained until the aircraft (1) lands.

10. A method according to Claim 8,
**characterised in that** the in-flight modification of a utilisation envelope to be applied during a given flight phase is authorised solely before the start of this given flight phase.

11. A method according to Claim 8,
**characterised in that** two utilisation envelopes to be selected from among the first utilisation envelope (101) and the second utilisation envelope (102) and the third utilisation envelope (103) are identical.

12. A method according to Claim 8,
**characterised in that**, at least one storage means (11) comprising a pre-established list of utilisation envelopes, the first utilisation envelope and also the second utilisation envelope and the third utilisation envelope are selected from said list.

13. A method according to Claim 8,
**characterised in that**, a generic envelope comprising rates of exchange between two distinct ratings, parameters of a mission are determined, then the first utilisation envelope and also the second utilisation envelope and the third utilisation envelope are generated from this generic envelope as a function of said parameters.
